# EUROPÄISCHE PATENTSCHRIFT

(11) **EP 2 718 157 B1**
(45) Veröffentlichungstag und Bekanntmachung des Hinweises auf die Patenterteilung: **04.10.2017**
(21) Anmeldenummer: 12729860.2
(22) Anmeldetag: 04.06.2012
(51) Int. Cl.: B60T 8/88, B60T 1/10

(54) **VERFAHREN ZUM BETREIBEN EINES FAHRZEUGS MIT EINER ELEKTRISCHEN ANTRIEBSMASCHINE**
METHOD FOR OPERATING A VEHICLE WITH AN ELECTRIC DRIVE MACHINE
PROCÉDÉ PERMETTANT DE FAIRE FONCTIONNER UN VÉHICULE ÉQUIPÉ D'UN MOTEUR D'ENTRAÎNEMENT ÉLECTRIQUE

(30) Priorität: 09.06.2011 DE 102011103660
(43) Veröffentlichungstag der Anmeldung: 16.04.2014
(60) Teilanmeldung: 17154418.2
(73) Patentinhaber: Volkswagen Aktiengesellschaft, 38440 Wolfsburg (DE)
(72) Erfinder: BORCHERS, Frank, 38536 Meinersen (DE); STEBNER, Frank, 38108 Braunschweig (DE)
(86) Internationale Anmeldenummer: PCT/EP2012/002355
(87) Internationale Veröffentlichungsnummer: WO 2012/167897

(56) Entgegenhaltungen:
- EP-A1- 1 547 891
- DE-A1-102006 034 936
- DE-A1-102006 055 765
- JP-A- H0 898 312
- JP-A- 2001 268 703
- JP-A- 2006 205 912

## Beschreibung

Die vorliegende Erfindung betrifft ein Verfahren zum Betreiben eines Fahrzeugs, welches eine elektrische maschine zum Antreiben des Fahrzeugs umfasst. Die vorliegende Erfindung betrifft insbesondere ein Verfahren für ein Fahrzeug, bei welchem elektrische Energie aus einer Bewegung des Fahrzeugs mittels der elektrischen Maschine zurückgewonnen werden kann. Schließlich betrifft die vorliegende Erfindung ein Fahrzeug, bei welchem das Verfahren verwendet wird.

Bei Fahrzeugen, wie z.B. Personenkraftwagen oder Lastkraftwagen, ist ein zuverlässiger Betrieb einer Bremsanlage des Fahrzeugs unter allen Bedingungen und über die gesamte Lebensdauer des Fahrzeugs von großer Wichtigkeit. Um beispielsweise auch bei nassen Bedingungen einen zuverlässigen und wirkungsvollen Betrieb der Bremsanlage des Fahrzeugs sicherzustellen, werden in dem Stand der Technik verschiedene Verfahren offenbart, um Reibkörper der Bremsanlage, beispielsweise eine Bremsscheibe, einen Bremsbelag oder eine Bremstrommel, im Betrieb des Fahrzeugs auch bei nassen oder feuchten Bedingungen möglichst trocken zu halten.

Die DE 103 55 258 A1 offenbart ein optimiertes Wischen von Fahrzeugbremsen. Beim Wischen von Bremsen des Kraftfahrzeugs bei Nässe werden die Bremsbeläge unter geringem Druck an das gebremste Element angelegt. Dieses Wischen der Bremsen ist nicht oder nur sehr schwach bemerkbar, wenn der Wischvorgang in einem Moment ausgelöst wird, in dem die Änderung der Fahrpedalstellung oder die Änderung der Fahrzeuggeschwindigkeit einen vorgegebenen Schwellenwert überschreitet.

Aus der DE 103 36 047 A1 ist ein Verfahren zum Verbessern des Bremsverhaltens eines Kraftfahrzeugs bei Regen bekannt. Dabei werden die Bremsscheiben durch Bremsenaktivierung abgewischt. Gemäß dem Verfahren wird bei gleichzeitiger Erfüllung der Bedingungen einer Regenerkennung, einer Nichtbetätigung der Bremse und einer Betätigung des Fahrpedals eine Hydraulikpumpe angesteuert und durch Öffnen eines Druckmittelweges, der von dem Hauptzylinder zu den Radbremsen führt, und durch Öffnen eines Druckmittelweges zur Saugseite der Hydraulikpumpe in dem Bremssystem zumindest kurzzeitig ein Staudruck hervorgerufen, welcher zum Abwischen der Bremsscheiben ausreicht.

Die DE 10 2009 016 732 A1 offenbart ein Verfahren zum Abtrocknen einer eine Bremsscheibe und Bremsbeläge umfassenden Betriebsbremse eines Kraftfahrzeugs, bei dem die Bremsbeläge an die Bremsscheibe derart angelegt werden, dass keine nennenswerte Fahrzeugverzögerung auftritt. Dazu wird das Zurücknehmen des Fahrpedals überwacht und beim Überschreiten eines Zurücknahme-Schwellenwertes das Verfahren zum Abtrocknen aktiviert.

Die DE 103 56 504 B4 betrifft ein Verfahren zum Wischen von Bremsen eines Fahrzeugs bei Nässe. Bremsbeläge werden unter geringem Druck an ein gebremstes Element, insbesondere eine Bremsscheibe, angelegt. Eine Bremswahrscheinlichkeit oder eine Größe, aus der eine Bremswahrscheinlichkeit abgeschätzt werden kann, wird ermittelt und ein Wischvorgang unter der Bedingung durchgeführt, dass die Bremswahrscheinlichkeit oder die Größe einen vorgegebenen Schwellenwert überschreitet.

Schließlich zeigt die gattungsgemäße DE 10 2006 055 765 A1 ein Verfahren zum Betreiben eines Fahrzeugs, bei dem der Bremsdruck der Bremsanlage nach Erfassen einer Betätigung des Bremspedals erzeugt wird. Die Einstellung des Bremsdruck erfolgt in Abhängigkeit eines Zustands der Bremsanlage, der die Bremskraftverteilung der Reibbremse darstellt.

Fahrzeuge mit einer elektrischen Antriebsmaschine, beispielsweise Elektrofahrzeuge oder Hybridfahrzeuge, verfügen üblicherweise über zwei Bremsmechanismen. Zum einen verfügen diese Fahrzeuge über eine Bremsanlage im herkömmlichen Sinne, beispielsweise eine hydraulische Bremsanlage, welche kinetische Energie des Fahrzeugs über Reibkörper, beispielsweise Bremsbeläge, Bremsscheiben und Bremstrommeln, in Wärme umwandelt. Andererseits kann die elektrische Maschine mittels geeigneter Ansteuerung in einen Generatorbetrieb oder Rekuperationsbetrieb eingestellt werden, um kinetische Energie des Fahrzeugs in elektrische Energie umzuwandeln, welche in einen elektrischen Energiespeicher des Fahrzeugs eingespeist werden kann, um nachfolgend mit Hilfe der elektrischen Maschine wieder zum Antreiben des Fahrzeugs verwendet zu werden. Im Sinne einer Energieverbrauchsoptimierung des Fahrzeugs wird das Fahrzeug bevorzugt durch den Rekuperationsbetrieb abgebremst. Dies hat zur Folge, dass die Bremsanlage entsprechen weniger häufig verwendet wird, wodurch verstärkt Verschmutzungen und Korrosionen an den Reifkörpern der Bremsanlage auftreten können, welche somit die Bremsfunktion und Lebensdauer der Bremsanlage beeinträchtigen können.

Aufgabe der vorliegenden Erfindung ist es daher, die geforderte Lebensdauer und Bremswirkung der Bremsanlage eines Fahrzeugs mit einer elektrischen Antriebsmaschine sicherzustellen.

Gemäß der vorliegenden Erfindung wird diese Aufgabe durch ein Verfahren zum Betreiben eines Fahrzeugs nach Anspruch 1, eine Vorrichtung für ein Fahrzeug nach Anspruch 8 und ein Fahrzeug nach Anspruch 9 gelöst. Die abhängigen Ansprüche definieren bevorzugte und vorteilhafte Ausführungsformen der Erfindung.

Gemäß der vorliegenden Erfindung wird ein Verfahren zum Betreiben eines Fahrzeugs, welches eine elektrische Maschine zum Antreiben des Fahrzeugs und eine Bremsanlage umfasst, bereitgestellt. Das Fahrzeug ist in der Lage, aus einer Bewegung des Fahrzeugs mittels der elektrischen Maschine elektrische Energie zurückzugewinnen. Bei dem Verfahren wird ein Zustand der Bremsanlage des Fahrzeugs bestimmt und eine Betätigung eines Bremspedals des Fahrzeugs erfasst. In Abhängigkeit des Zustands der Bremsanlage und der Betätigung des Bremspedals werden ein Bremsdruck der Bremsanlage und eine Energierückgewinnung mittels der elektrischen Maschine eingestellt. Wie zuvor beschrieben kann sich der Zustand der Bremsanlage beispielsweise aufgrund seltener oder schwacher Betätigungen verschlechtern. Indem der Bremsdruck der Bremsanlage und die Energierückgewinnung mittels der elektrischen Maschine in Abhängigkeit des Zustands der Bremsanlage eingestellt werden, kann beispielsweise bei einem guten Zustand der Bremsanlage das Fahrzeug hauptsächlich mittels der elektrischen Maschine und der Energierückgewinnung verzögert werden, wohingegen bei einem verschlechterten Zustand der Bremsanlage das Fahrzeug über die Bremsanlage verzögert werden kann, um beispielsweise Bremskörper der Bremsanlage dadurch zu reinigen und somit den Zustand der Bremsanlage zu verbessern. Dadurch kann die Lebensdauer der Bremsanlage erhöht werden und darüber hinaus eine gute Wirkung der Bremsanlage sichergestellt werden.

Das Bestimmen des Zustands der Bremsanlage umfasst ein Bestimmen eines Beeinträchtigungszustands der Bremsanlage. Der Beeinträchtigungszustand zeigt eine Beeinträchtigung einer Bremswirkung der Bremsanlage aufgrund von Korrosion oder Verschmutzung an Reibkörpern der Bremsanlage an. Mit steigender Beeinträchtigung der Bremswirkung der Bremsanlage kann ein Verhältnis von Bremsdruck zu Energierückgewinnung erhöht werden. Dadurch kann sichergestellt werden, dass die Bremsanlage so selten wie möglich, aber so oft wie nötig betätigt wird, um einen zuverlässigen Betrieb der Bremsanlage sicherzustellen. Gleichzeitig kann möglichst viel elektrische Energie zurückgewonnen werden.

Gemäß einer Ausführungsform umfasst das Bestimmen des Zustands der Bremsanlage ein Erfassen von Aktivierungen der Bremsanlage in einem vorbestimmten Zeitintervall vor dem Erfassen der Betätigung des Bremspedals. Beispielsweise kann eine Häufigkeit von Aktivierungen der Bremsanlage in dem vorbestimmten Zeitintervall oder ein zeitlicher Abstand zwischen einer letzten Aktivierung der Bremsanlage und der aktuellen Betätigung des Bremspedals erfasst werden, um daraus abzuleiten, ob eine Betätigung der Bremsanlage zur Reinigung der Reibkörper der Bremsanlage erforderlich ist oder nicht. Dadurch kann die Betätigung der Bremsanlage auf ein Minimum verringert werden, um eine möglichst große Menge elektrischer Energie im Betrieb des Fahrzeugs zurückgewinnen zu können.

Gemäß einer weiteren Ausführungsform wird zur Bestimmung des Zustands der Bremsanlage eine Intensität einer Aktivierung der Bremsanlage erfasst. Da die Reinigungswirkung der Reibkörper mit steigender Intensität einer Betätigung, d.h. mit steigendem Bremsdruck, steigt, kann ein Erfassen der Bremsintensität beispielsweise über einen vorbestimmten vergangenen Zeitraum Aufschluss über den Zustand der Bremsanlage geben.

Gemäß einer weiteren Ausführungsform wird der Zustand der Bremsanlage bestimmt, indem eine Bremswirkung der Bremsanlage bestimmt wird. Da die Bremswirkung der Bremsanlage mit zunehmender Verschmutzung oder Korrosion der Reibkörper abnimmt, kann durch Bestimmen der Bremswirkung der Bremsanlage der Zustand der Bremsanlage zuverlässig bestimmt werden. Dazu können beispielsweise ein Bremsdruck der Bremsanlage bei einer Aktivierung der Bremsanlage bestimmt werden und ein Geschwindigkeitsverlauf des Fahrzeugs bei der Aktivierung der Bremsanlage erfasst werden. Über den Geschwindigkeitsverlauf des Fahrzeugs kann die Verzögerung des Fahrzeugs bei dem erfassten Bremsdruck ermittelt werden. Wenn sich der Zustand der Bremsanlage durch Korrosion oder Verschmutzung an Reibkörpern der Bremsanlage verschlechtert, ist ein höherer Bremsdruck zum Erreichen einer vorbestimmten Verzögerung des Fahrzeugs erforderlich. Daher kann aus dem Bremsdruck und dem Geschwindigkeitsverlauf des Fahrzeugs auf den Zustand der Bremsanlage geschlossen werden.

Weiterhin kann zum Bestimmen des Zustands der Bremsanlage die Energierückgewinnung mittels der elektrischen Maschine in einem vorbestimmten Zeitintervall vor dem Erfassen der Betätigung des Bremspedals erfasst werden. Wenn in dem vorbestimmten Zeitintervall sehr häufig Energie mittels der elektrischen Maschine zurückgewonnen wurde, wurde die Bremsanlage weniger oft und weniger intensiv betätigt, wodurch sich der Zustand der Bremsanlage verschlechtert haben kann. Demzufolge kann auch durch Erfassen der Energierückgewinnungsvorgänge in dem vorbestimmten Zeitintervall auf den Zustand der Bremsanlage geschlossen werden.

Gemäß der vorliegenden Erfindung wird weiterhin eine Vorrichtung für ein Fahrzeug, welches eine elektrische Maschine zum Antreiben des Fahrzeugs und eine Bremsanlage umfasst, bereitgestellt. Das Fahrzeug ist in der Lage, aus einer Bewegung des Fahrzeugs mittels der elektrischen Maschine elektrische Energie zurückzugewinnen, d.h. kinetische Energie des Fahrzeugs mittels der elektrischen Maschine in elektrische Energie umzuwandeln. Die Vorrichtung ist in der Lage, einen Zustand der Bremsanlage des Fahrzeugs zu bestimmen, eine Betätigung des Bremspedals des Fahrzeugs zu erfassen, und einen Bremsdruck der Bremsanlage und eine Energierückgewinnung mittels der elektrischen Maschine in Abhängigkeit des Zustands der Bremsanlage und der Betätigung des Bremspedals einzustellen. Die Vorrichtung ist zur Durchführung des zuvor beschriebenen Verfahrens ausgestaltet und umfasst daher auch die zuvor beschriebenen Vorteile.

Schließlich wird gemäß der vorliegenden Erfindung ein Fahrzeug bereitgestellt, welches eine elektrische Maschine zum Antreiben des Fahrzeugs umfasst. Das Fahrzeug ist ausgestaltet, elektrische Energie aus einer Bewegung des Fahrzeugs mittels der elektrischen Maschine zurückzugewinnen. Das Fahrzeug umfasst ferner eine Bremsanlage, ein Bremspedal und die zuvor beschriebene Vorrichtung. Daher umfasst das Fahrzeug ebenfalls die zuvor beschriebenen Vorteile.

Die vorliegende Erfindung wird nachfolgend unter Bezugnahme auf die Zeichnungen im Detail erläutert werden.
Fig. 1 zeigt schematisch eine Draufsicht eines Fahrzeugs gemäß einer Ausführungsform der vorliegenden Erfindung.
Fig. 2 zeigt schematisch einen Ablauf eines Verfahrens gemäß einer Ausführungsform der vorliegenden Erfindung.

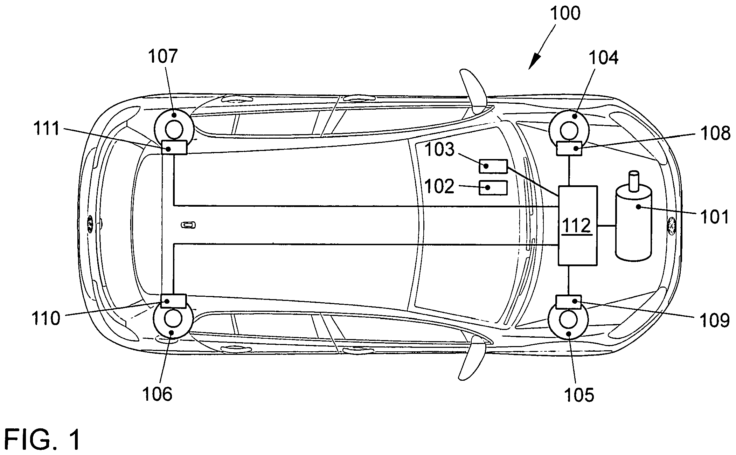

Fig. 1 zeigt ein Fahrzeug 100 mit einer elektrischen Antriebsmaschine 101. Die elektrische Antriebsmaschine 101 ist mit (nicht gezeigten) Antriebsrädern des Fahrzeugs 100 gekoppelt und in der Lage, die Räder anzutreiben, um das Fahrzeug in Bewegung zu setzen. Darüber hinaus ist die elektrische Antriebsmaschine 101 in der Lage, mittels einer geeigneten Ansteuerung kinetische Energie des Fahrzeugs 100 in elektrische Energie umzuwandeln, indem von der elektrischen Antriebsmaschine 101 ein einer Drehung der Antriebsräder entgegenwirkendes Drehmoment auf die Antriebsräder ausgeübt wird. Das Fahrzeug 100 umfasst weiterhin einen elektrischen Energiespeicher, welcher in Fig. 1 nicht gezeigt ist, um elektrische Energie für den Antrieb der elektrischen Antriebsmaschine 101 bereitzustellen und um elektrische Energie, welche von der elektrischen Antriebsmaschine 101 erzeugt wird, zu speichern. Der Vorgang des Erzeugens von elektrischer Energie aus kinetischer Energie des Fahrzeugs 100 wird auch als Energierückgewinnung oder Rekuperation bezeichnet.

Das Fahrzeug 100 umfasst weiterhin ein Fahrpedal 102 und ein Bremspedal 103. Über das Fahrpedal 102 stellt ein Fahrer des Fahrzeugs 100 eine gewünschte Energieabgabe der elektrischen Antriebsmaschine 101 an die Antriebsräder des Fahrzeugs 100 ein und mittels des Bremspedals 103 stellt der Fahrer des Fahrzeugs 100 eine gewünschte Verzögerung des Fahrzeugs 100 ein oder begrenzt eine Beschleunigung des Fahrzeugs 100, wenn dies beispielsweise bergab rollt. Nachfolgend wird der Begriff "Verzögern des Fahrzeugs" in einer verallgemeinerten Form verwendet, welche sowohl das tatsächliche Verzögern des Fahrzeugs 100 als auch ein Begrenzen einer Beschleunigung des Fahrzeugs 100 umfasst. Anders ausgedrückt wird nachfolgend der Begriff "Verzögern des Fahrzeugs" für einen Zustand des Fahrzeugs verwendet, bei dem auf die Antriebsräder des Fahrzeugs ein Moment ausgeübt wird, welches einer aktuellen Drehrichtung der Antriebsräder entgegenwirkt.

Das Fahrzeug 100 umfasste weiterhin eine Bremsanlage, von welcher in der Fig. 1 lediglich vier Bremsscheiben 104-107 und jeweils zugeordnete Bremszangen 108-111 dargestellt sind. Die Bremsanlage kann auch andere Reibkörper statt der gezeigten Bremsscheiben 104-107 und Bremszangen 108-111 umfassen, beispielsweise Trommelbremsen mit entsprechenden Trommelbremszylindern. Die Bremsanlage kann beispielsweise eine hydraulische Bremsanlage oder eine elektrische Bremsanlage umfassen. Somit ergeben sich für das Fahrzeug 100 zwei Möglichkeiten, eine Verzögerung für das Fahrzeug 100 bereitzustellen, nämlich durch Rekuperation mittels der elektrischen Antriebsmaschine 101 und mittels der Bremsanlage. Daher umfasst das Fahrzeug 100 eine Vorrichtung 112, welche mit dem Bremspedal, der Bremsanlage und der elektrischen Antriebsmaschine 101 gekoppelt ist. Die Vorrichtung 112 kann beispielsweise eine Steuervorrichtung mit einer Mikroprozessorsteuerung umfassen.

Die Vorrichtung 112 ist in der Lage, eine Betätigung des Bremspedals 103 zu erfassen und in Abhängigkeit von der Betätigung des Bremspedals 103 einen Bremsdruck der Bremsanlage einzustellen und eine Energierückgewinnung mittels der elektrischen Maschine 101 einzustellen. Dabei wird üblicherweise möglichst die gesamte oder ein möglichst großer Teil der mit dem Bremspedal 103 angeforderten Verzögerung über die Energierückgewinnung mittels der elektrischen Antriebsmaschine 101 erzeugt. Dies kann jedoch zur Folge haben, dass im Zuge der geringeren Betätigungsanzahl der hydraulischen Bremsanlage die Bremsscheiben 104-107 korrodieren oder verschmutzen und die Bremsbeläge der Bremszangen 108-111 verschmutzen. Dadurch kann die Wirkung der hydraulischen Bremsanlage nachlassen und die Lebensdauer der Bremsanlage verkürzt werden, wenn aufgrund von Korrosion und Verschmutzung kein sicherer Betrieb der Bremsanlage mehr gewährleistet werden kann. Daher bestimmt die Vorrichtung 112 im laufenden Betrieb des Fahrzeugs 100 kontinuierlich den Zustand der Bremsanlage und, wenn die Vorrichtung 112 feststellt, dass die hydraulische Bremsanlage nicht ausreichend oft oder intensiv betätigt wurde, bremst das Fahrzeug 100 bei einer nächsten Betätigung des Bremspedals 103 verstärkt über die hydraulische Bremsanlage ab, um dadurch eine Selbstreinigung der Bremskörper, d.h. der Bremsscheiben 104-107 und der Bremsbeläge der Bremszangen 108-111, zu erreichen. Beispielsweise berücksichtigt die Vorrichtung 112 den Anteil an Bremsaktivitäten, welche hydraulisch durchgeführt werden, und den Anteil an Bremsaktivitäten, welche rekuperativ durchgeführt werden. Auf Basis von beispielsweise zweier Integratoren wird wiederkehrend entschieden, ob eine Bremsung zur Reinigung der Bremskörper mit Hilfe der hydraulischen Bremsanlage auszuführen ist. Dieser Vorgang kann für einen Fahrer des Fahrzeugs nicht spürbar und energetisch optimal ausgeführt werden.

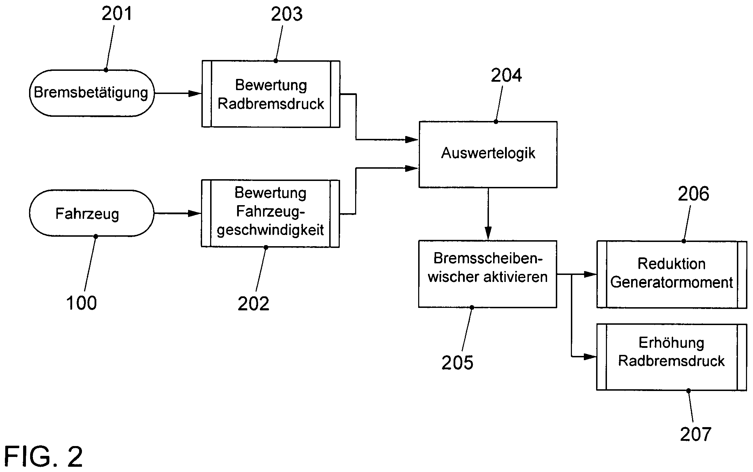

Im Zusammenhang mit Fig. 2 wird nachfolgend eine weitere Ausführungsform der Arbeitsweise der Vorrichtung 112 beschrieben werden. Aufgrund einer Bremsbetätigung 201 des Bremspedals 103 stellt die Vorrichtung 112 einen Bremsdruck der Bremsanlage und eine Energierückgewinnung mittels der elektrischen Maschine 101 ein. Dadurch stellt sich eine Verzögerung des Fahrzeugs ein, welche aus Daten des Fahrzeugs 100 über eine Bewertung der Fahrzeuggeschwindigkeit 202 bestimmt wird. Ebenso wird der hydraulisch aufgebaute Radbremsdruck bewertet (Schritt 203) und der Radbremsdruck sowie der Verlauf der Fahrzeuggeschwindigkeit einer Auswertelogik 204 zugeführt. Somit kann ein aktueller Wirkungsgrad der Bremsanlage des Fahrzeugs 100 bestimmt werden und in Abhängigkeit davon entschieden werden, ob eine Selbstreinigung der Bremsanlage durch intensiveres Betätigen durchgeführt werden sollte. Wenn dies der Fall ist, wird im Schritt 205 das Bremsscheibenwischen aktiviert, wodurch bei einer nächsten Betätigung der Bremse oder bei der aktuellen Betätigung der Bremse das bremsende Moment durch die elektrische Antriebsmaschine verringert wird, d.h., das Generatormoment reduziert wird (Schritt 206), und der Radbremsdruck erhöht wird (Schritt 207).

Zusätzlich kann die Vorrichtung 112 beispielsweise im Betrieb des Fahrzeugs 100 bestimmen, wie häufig das Fahrzeug 100 mittels der generatorbetriebenen Antriebsmaschine 101 verzögert wurde und wie häufig und intensiv die hydraulische Bremsanlage betätigt wurde. In Abhängigkeit dieser erfassten Informationen kann zur Vermeidung einer Beeinträchtigung der Funktion der hydraulischen Bremsanlage die Energierückgewinnung mittels der elektrischen Antriebsmaschine 101 bei einem Bremsvorgang zugunsten einer Erhöhung des Bremsdrucks der Bremsanlage erhöht werden, wenn beispielsweise bestimmte Schwellenwerte über- oder unterschritten werden. Beispielsweise kann ein Bremsscheibenwischen aktiviert werden, wenn die hydraulische Bremsanlage länger als eine vorbestimmte Zeitdauer nicht betätigt wurde oder innerhalb einer vorbestimmten Zeitdauer nur unterhalb einer vorbestimmten Bremsintensität betätigt wurde. Ebenso kann eine Häufigkeit einer Betätigung der hydraulischen Bremsanlage als Kriterium für ein Aktivieren des Bremsscheibenwischens herangezogen werden.

## Patentansprüche

1. Verfahren zum Betreiben eines Fahrzeugs, wobei das Fahrzeug (100) eine elektrische Maschine (101) zum Antreiben des Fahrzeugs (100) und eine Bremsanlage (104-111) umfasst, wobei das Fahrzeug (100) ausgestaltet ist, elektrische Energie aus einer Bewegung des Fahrzeugs (100) mittels der elektrischen Maschine (101) zurückzugewinnen, wobei das Verfahren umfasst:
- Bestimmen eines Zustands der Bremsanlage (104-111) des Fahrzeugs (100),
- Erfassen einer Betätigung eines Bremspedals (103) des Fahrzeugs (100), und
- Einstellen eines Bremsdrucks der Bremsanlage (104-111) und einer Energierückgewinnung mittels der elektrischen Maschine (101) in Abhängigkeit des Zustands der Bremsanlage (104-111) und der Betätigung des Bremspedals (103),
**dadurch gekennzeichnet, dass** das Bestimmen des Zustands der Bremsanlage (104-111) ein Bestimmen eines Beeinträchtigungszustands der Bremsanlage (104-111) umfasst, wobei der Beeinträchtigungszustand eine Beeinträchtigung einer Bremswirkung der Bremsanlage (104-111) aufgrund von Korrosion oder Verschmutzung an Reibkörpern der Bremsanlage (104-111) anzeigt.

2. Verfahren nach Anspruch 1, wobei das Einstellen des Bremsdrucks der Bremsanlage (104-111) und der Energierückgewinnung mittels der elektrischen Maschine (101) umfasst:
- Erhöhen eines Verhältnisses von Bremsdruck zu Energierückgewinnung mit steigender Beeinträchtigung der Bremswirkung der Bremsanlage (104-111).

3. Verfahren nach einem der vorhergehenden Ansprüche, wobei das Bestimmen des Zustands der Bremsanlage (104-111) ein Erfassen von Aktivierungen der Bremsanlage (104-111) in einem vorbestimmten Zeitintervall vor dem Erfassen der Betätigung des Bremspedals (103) umfasst.

4. Verfahren nach einem der vorhergehenden Ansprüche, wobei das Bestimmen des Zustands der Bremsanlage (104-111) ein Erfassen einer Intensität einer Aktivierung der Bremsanlage (104-111) umfasst.

5. Verfahren nach einem der vorhergehenden Ansprüche, wobei das Bestimmen des Zustands der Bremsanlage (104-111) ein Bestimmen einer Bremswirkung der Bremsanlage (104-111) umfasst.

6. Verfahren nach Anspruch 5, wobei das Bestimmen der Bremswirkung umfasst:
- Bestimmen (203) eines Bremsdrucks der Bremsanlage (104-111) bei einer Aktivierung der Bremsanlage, und
- Bestimmen (202) eines Geschwindigkeitsverlaufs des Fahrzeugs (100) bei der Aktivierung der Bremsanlage (104-111).

7. Verfahren nach einem der vorhergehenden Ansprüche, wobei das Bestimmen des Zustands der Bremsanlage (104-111) ein Erfassen von Energierückgewinnungen mittels der elektrischen Maschine (101) in einem vorbestimmten Zeitintervall vor dem Erfassen der Betätigung des Bremspedals (103) umfasst.

8. Vorrichtung **dadurch gekennzeichnet, dass** sie zur Durchführung des Verfahrens nach einem der Ansprüche 1-7 ausgestaltet ist.

9. Fahrzeug, umfassend:
- elektrische Maschine (101) zum Antreiben des Fahrzeugs (100), wobei das Fahrzeug (100) ausgestaltet ist, elektrische Energie aus einer Bewegung des Fahrzeugs (100) mittels der elektrischen Maschine (101) zurückzugewinnen,
- eine Bremsanlage (104-111),
- ein Bremspedal (103), und
- eine Vorrichtung (112) nach Anspruch 8.

## Claims

1. Method for operating a vehicle, wherein the vehicle (100) comprises an electrical machine (101) for driving the vehicle (100) and comprises a brake system (104-111), wherein the vehicle (100) is designed to recover electrical energy from a movement of the vehicle (100) by means of the electrical machine (101), wherein the method comprises:
- determining a state of the brake system (104-111) of the vehicle (100),
- detecting an actuation operation of a brake pedal (103) of the vehicle (100), and
- adjusting a brake pressure of the brake system (104-111) and an energy recovery operation by means of the electrical machine (101) depending on the state of the brake system (104-111) and the actuation of the brake pedal (103), **characterized in that** determining the state of the brake system (104-111) comprises determining a degradation state of the brake system (104-111), wherein the degradation state indicates degradation of a braking effect of the brake system (104-111) due to corrosion or soiling of frictional bodies of the brake system (104-111).

2. Method according to Claim 1, wherein adjusting the brake pressure of the brake system (104-111) and the energy recovery by means of the electrical machine (101) comprises:
- increasing a ratio of brake pressure to energy recovery as degradation of the braking effect of the brake system (104-111) increases.

3. Method according to either of the preceding claims, wherein determining the state of the brake system (104-111) comprises detecting activation operations of the brake system (104-111) in a predetermined time interval before the actuation of the brake pedal (103) is detected.

4. Method according to one of the preceding claims, wherein determining the state of the brake system (104-111) comprises detecting an intensity of an activation operation of the brake system (104-111).

5. Method according to one of the preceding claims, wherein determining the state of the brake system (104-111) comprises determining a braking effect of the brake system (104-111).

6. Method according to Claim 5, wherein determining the braking effect comprises:
- determining (203) a brake pressure of the brake system (104-111) when the brake system is activated, and
- determining (202) a speed profile of the vehicle (100) when the brake system (104-111) is activated.

7. Method according to one of the preceding claims, wherein determining the state of the brake system (104-111) comprises determining energy recovery operations by means of the electrical machine (101) in a predetermined time interval before the actuation of the brake pedal (103) is detected.

8. Apparatus, **characterized in that** it is designed to carry out the method according to one of Claims 1-7.

9. Vehicle comprising:
- an electrical machine (101) for driving the vehicle (100), wherein the vehicle (100) is designed to recover electrical energy from a movement of the vehicle (100) by means of the electrical machine (100),
- a brake system (104-111),
- a brake pedal (103), and
- an apparatus (112) according to Claim 8.

## Revendications

1. Procédé pour faire fonctionner un véhicule, le véhicule (100) comprenant une machine électrique (101) servant à la propulsion du véhicule (100) et un système de freinage (104-111), le véhicule (100) étant configuré pour récupérer de l'énergie électrique résultant d'un mouvement du véhicule (100) au moyen de la machine électrique (101), le procédé comprenant les étapes suivantes :
- détermination d'un état du système de freinage (104-111) du véhicule (100),
- détection d'un actionnement d'une pédale de frein (103) du véhicule (100),
- réglage d'une pression de freinage du système de freinage (104-111) et d'une récupération d'énergie au moyen de la machine électrique (101) en fonction de l'état du système de freinage (104-111) et de l'actionnement de la pédale de frein (103),
**caractérisé en ce que** la détermination de l'état du système de freinage (104-111) comprend une détermination d'un état de dégradation d'un effet de freinage du système de freinage (104-111) en raison de la corrosion ou d'un encrassement sur les corps de friction du système de freinage (104-111).

2. Procédé selon la revendication 1, le réglage de la pression de freinage du système de freinage (104-111) et la récupération d'énergie au moyen de la machine électrique (101) comprenant :
- augmentation d'un rapport entre la pression de freinage et la récupération d'énergie à mesure que la dégradation de l'effet de freinage du système de freinage (104-111) augmente.

3. Procédé selon l'une des revendications précédentes, la détermination de l'état du système de freinage (104-111) comprenant une détection des activations du système de freinage (104-111) dans un intervalle de temps prédéterminé avant la détection de l'actionnement de la pédale de frein (103).

4. Procédé selon l'une des revendications précédentes, la détermination de l'état du système de freinage (104-111) comprenant une détection d'une intensité d'une activation du système de freinage (104-111).

5. Procédé selon l'une des revendications précédentes, la détermination de l'état du système de freinage (104-111) comprenant une détermination d'un effet de freinage du système de freinage (104-111).

6. Procédé selon la revendication 5, la détermination de l'effet de freinage comprenant :
- détermination (203) d'une pression de freinage du système de freinage (104-111) lors d'une activation du système de freinage, et
- détermination (202) d'une courbe de vitesse du véhicule (100) lors de l'activation du système de freinage (104-111).

7. Procédé selon l'une des revendications précédentes, la détermination de l'état du système de freinage (104-111) comprenant une détection des récupérations d'énergie au moyen de la machine électrique (101) dans un intervalle de temps prédéterminé avant la détection de l'actionnement de la pédale de frein (103).

8. Dispositif **caractérisé en ce qu'**il est configuré pour mettre en oeuvre le procédé selon l'une des revendications 1 à 7.

9. Véhicule, comprenant :
- une machine électrique (101) servant à la propulsion du véhicule (100), le véhicule (100) étant configuré pour récupérer de l'énergie électrique résultant d'un mouvement du véhicule (100) au moyen de la machine électrique (101),
- un système de freinage (104-111),
- une pédale de frein (103), et
- un dispositif (112) selon la revendication 8.
